Europäisches Patentamt

European Patent Office

Office européen des brevets

(19)

(11) Numéro de publication: **0 462 038 B1**

(12)

# FASCICULE DE BREVET EUROPEEN

(45) Date de publication de fascicule du brevet: **31.08.94**  (51) Int. Cl.⁵: **A01G 25/06**

(21) Numéro de dépôt: **91430013.2**

(22) Date de dépôt: **10.06.91**

(54) **Tuyau poreux pour le transport et la distribution de fluides, notamment pour l'arrosage par suintement.**

(30) Priorité: **11.06.90 ES 9001612**

(43) Date de publication de la demande:
**18.12.91 Bulletin 91/51**

(45) Mention de la délivrance du brevet:
**31.08.94 Bulletin 94/35**

(84) Etats contractants désignés:
**AT BE CH DE DK FR GB GR IT LI LU NL SE**

(56) Documents cités:
**WO-A-86/06578**
**FR-A- 2 501 108**
**US-A- 3 552 654**
**US-A- 3 939 875**

(73) Titulaire: **CREACIONES TECNICAS AGRICO-LAS, S.A. (SOCIETE DE DROIT ESPAGNOL)**
**2, calle Recadero**
**E-08005 Barcelona (ES)**

(72) Inventeur: **Maso Marcet, José Maria**
**214, calle Viladomat**
**E-08029 Barcelona (ES)**

(74) Mandataire: **Marek, Pierre et al**
**28 & 32 rue de la Loge**
**F-13002 Marseille (FR)**

Rank Xerox (UK) Business Services
(3.10/3.09/3.3.3)

**Description**

La présente invention a pour objet un tuyau poreux ou microporeux, pour le transport et la distribution de fluides, notamment pour l'arrosage par suintement, qui est applicable, en particulier, aux systèmes d'arrosage par suintement ou exsudation, des cultures agricoles de toute nature, ce tuyau pouvant, dans cette application, être disposé en surface ou enterré. D'autres applications du tuyau qui fait l'objet de l'invention, sont les suivantes : propagation d'air et d'autres gaz dans l'eau, dans le sol et dans l'air.

On décrit, dans la suite du présent exposé, l'application très avantageuse de l'invention à l'arrosage des cultures au moyen d'eau améliorée distribuée par effet de suintement, mais on rappelle que le tuyau poreux revendiqué peut aussi être utilisé pour le drainage et pour le transport et/ou la distribution d'autres liquides ou de fluides gazeux.

Actuellement, l'irrigation des cultures par l'utilisation de systèmes d'arrosage basés sur l'effet de suintement que réalisent certains types de tuyaux ou de canalisations disponibles sur le marché, est largement répandue, quelle que soit la nature de ces cultures et indépendamment de leur localisation, qu'il s'agisse de cultures en plein air ou de cultures à l'intérieur de bâtiments spécialement conçus à cet effet.

De tels tuyaux ou canalisations sont utilisés pour la distribution du liquide d'arrosage qui, comme on le sait, est fréquemment composé d'eau additionnée d'engrais et/ou de produits chimiques dissous qui entrent dans le processus d'irrigation. A la différence d'autres systèmes d'arrosage, comme l'arrosage par inondation ou l'arrosage par aspersion, l'utilisation de tuyaux ou de canalisations d'arrosage par suintement présente comme avantages essentiels une plus grande uniformité quant à la distribution du volume de liquide d'arrosage et, à égalité de rendement, nécessite, en général, un volume très inférieur du liquide en question. Il en résulte, par conséquent, une diminution des coûts globaux du processus d'irrigation.

Les canalisations et les tuyaux poreux d'arrosage par suintement peuvent être installés sur la surface même du terrain ou enterrés. Les variables de fonctionnement et celles de l'installation des tuyaux et des canalisations d'arrosage par suintement dont il est question, s'adaptent aux caractéristiques que demande chaque cas concret d'application, en particulier, en ce qui concerne le débit du liquide d'arrosage fourni et la profondeur de l'installation.

Les tuyaux ou canalisations d'arrosage par suintement disponibles actuellement qui sont utilisés dans les systèmes d'arrosage, peuvent, de façon générale, être classés, suivant leur nature constitutive, de la manière suivante :

a) les tuyaux constitués d'un mélange de caoutchouc granulé et de résines de polyéthylène de basse densité ; ces tuyaux sont obtenus par extrusion des deux composants constitutifs précités.

b) les tuyaux de structure laminaire obtenus par superposition de deux couches collées ou plus ; ces couches sont composées de matériel de fibre de polyéthylène.

Les deux catégories de tuyaux citées ci-dessus, (a) et (b), présentent, de façon isolée ou globale, les inconvénients suivants :

- pour produire le suintement ou l'exsudation du liquide d'arrosage dans la majorité des conditions normales de fonctionnement, le liquide doit circuler, à travers les tuyaux d'arrosage poreux susmentionnés, en régime turbulent, ce qui implique une diminution considérable des performances du système d'arrosage utilisé, spécialement en ce qui concerne l'extension en longueur de tels tuyaux d'arrosage par suintement.
- une résistance limitée à la traction et aux impacts mécaniques, de sorte que, compte tenu des conditions habituelles de travail auxquelles ils sont soumis, ces tuyaux d'arrosage par suintement font constamment l'objet d'éclatements ou de déchirures, ce qui entraîne des coûts élevés d'entretien.
- une faible flexibilité mécanique qui limite ou empêche leur adaptation aux accidents du terrain de la zone irriguée, ce qui rend les opérations de montage plus difficiles et augmente ainsi les coûts d'installation.
- une faible résistance à l'action des agents ambiants comme les engrais, les racines, les bactéries, etc., ce qui est un facteur de réduction de leur durée de vie utile, et implique la nécessité de remplacer de façon relativement fréquente les tuyaux poreux du système d'arrosage par suintement.
- et le fait qu'ils occupent, étant donné leur faible flexibilité mécanique, précédemment mentionnée, un volume de stockage important.

Dans le but de proposer une nouvelle réalisation de tuyaux d'arrosage par suintement capable de résoudre les problèmes décrits ci-dessus, qui sont, en résumé :

- la circulation du liquide d'arrosage à haute pression, et par conséquent, en régime turbulent,
- une résistance limitée aux efforts de traction et aux impacts mécaniques,
- une faible flexibilité mécanique et d'adaptation aux accidents du terrain,

- une faible résistance à l'action destructrice des agents ambiants et, par conséquent, un rapide vieillissement,
- et un volume de stockage élevé,

est présenté un tuyau poreux d'arrosage par suintement, de constitution et de structure nouvelles.

Le tuyau poreux d'arrosage par suintement ou exsudation qui fait l'objet de la présente invention, a pour caractéristique, le fait d'être constitué d'une âme intégrante de tuyau en tissu qui présente une résistance très élevée à l'action des agents organiques et inorganiques, à l'humidité et aux variations de température ; cette âme intégrante de tuyau en tissu est recouverte d'une matière poreuse composée d'un mélange de :

- résine
- plastifiant
- pigment
- bactéricide
- fongicides
- algicides
- épaississants.

D'autre part, ce tuyau poreux a, de manière avantageuse, une capacité d'absorption d'eau comprise entre 0.5 % et 50 % du poids du mélange, tandis que la proportion occupée par le tuyau en tissu et le revêtement en matériau poreux, étant d'un poids se situant entre 5/1 et 1/5, cette proportion ayant, par exemple, une valeur moyenne normale 2/1.

Une autre caractéristique du tuyau poreux d'arrosage par suintement qui fait l'objet de l'invention, réside dans le fait que l'âme intégrale du tuyau en tissu, est tissée selon un quelconque procédé de tissage.

Cette âme intégrale est obtenue à partir de fibres synthétiques comme les polyesters, les polyamides, les polyoléfines ou les acryliques.

La résine composant le matériau poreux qui recouvre le tuyau en tissu précédemment décrit, est hautement résistante au vieillissement dû aux effets de l'eau, de l'air, du soleil, des composants propres des terrains, et des produits chimiques et/ou naturels d'engrais et de traitement des terres.

D'autre part, le plastifiant qui compose le matériau poreux en question, consiste en un mélange de chlore et de phosphore de faible solubilité dans l'eau, non corrosif, et à haut point d'ébullition.

La structure et les éléments constitutifs qui caractérisent le tuyau poreux d'arrosage par suintement qui fait l'objet de l'invention, permettent un suintement efficace du liquide d'arrosage au travers des parois de ce tuyau, y compris dans le cas de pressions de travail, ou de circulation dudit liquide d'arrosage, très réduites.

Concrètement, ce tuyau poreux d'arrosage par suintement de structure et de composition nouvelles, est efficace à partir d'une pression de 20 kPa, pression qui est très inférieure par rapport à la pression de 80 kPa, approximativement, que requièrent les réalisations connues pour amorcer le processus de suintement.

Dans les conditions normales d'utilisation, le tuyau poreux d'arrosage par suintement qui fait l'objet de l'invention, fournit les débits du liquide d'arrosage, qui sont donnés en fonction des caractéristiques spécifiques de chaque culture, à une pression de travail comprise entre 30 kPa et 80 kPa ; cet écart de pressions est, de nouveau, très faible par rapport à la pression de travail de 120 kPa que, dans des conditions égales en ce qui concerne le débit du liquide d'arrosage fourni, exigent la majorité des réalisations de tuyaux poreux d'arrosage par suintement connues. De toutes façons, avec le tuyau qui fait l'objet de l'invention, il est posible de travailler avec des pressions plus élevées, comme par exemple des pressions qui se situent entre 100 kPa et 1000 kPa, aux fins d'obtenir des débits plus importants, avec la garantie de résistance totale et normale.

Etant donné la faible pression de travail, à partir de laquelle le tuyau poreux d'arrosage par suintement objet de l'invention est efficace, les pertes de charge dues à la circulation du liquide d'arrosage à travers ce tuyau, sont sensiblement inférieures par rapport aux réalisations connues susmentionnées.

L'avantage précédemment décrit, résultant de la faible pression à laquelle le liquide d'arrosage peut circuler, implique logiquement une réduction considérable de la pression de travail nécessaire à l'origine de l'installation d'arrosage ainsi que la réduction consécutive, quant à l'envergure des dispositifs d'impulsion et de régulation du liquide d'arrosage de ladite installation.

Le fait que le tuyau poreux d'arrosage par suintement selon l'invention, soit efficace avec de faibles pressions de travail, à partir de 20 pKa, comme il a été indiqué ci-dessus, permet que le liquide d'arrosage circule à travers le tuyau en question en régime laminaire ou en régime de transition, à la différence de la majorité des réalisations connues, pour lesquelles les conditions de fonctionnement habituelles pour réaliser le suintement du liquide d'arrosage dépendent du fait que la circulation du liquide en question se trouve en régime turbulent. Comme on le sait, la circulation de liquides en régime turbulent est soumise à des limites considérables relatives aux performances des canalisations. En effet, la circulation en régime turbulent du liquide d'arrosage exige, à débit de suintement égal, l'utilisation de lignes d'arrosage de longueur réduite par rapport au diamètre utilisé.

Le tableau NO 1, qui est présenté ci-après, montre les longueurs pouvant être atteintes par les lignes d'arrosage sur la base de l'utilisation du tuyau poreux d'arrosage par suintement qui fait l'objet de l'invention, travaillant dans tous les cas en régime laminaire ou en régime de transition, c'est-à-dire, en régime compris entre les régimes laminaire et turbulent.

## Tableau NO 1

| Diamètre (millimètres) | Longueur (mètres) |
|---|---|
| 10 | 100 |
| 12 | 140 |
| 17 | 240 |

Dans lequel :
- Diamètre, est le diamètre intérieur de la canalisation;
- Longueur, est la longueur de la ligne d'arrosage.

Un autre avantage dû à la structure et à la constitution innovatrices du tuyau poreux d'arrosage par suintement qui fait l'objet de l'invention, consiste en sa résistance élevée à l'éclatement, que celui-ci soit provoqué par la pression du liquide d'arrosage ou à la suite d'efforts de traction mécanique.

A ce sujet, il faut remarquer que le tuyau poreux d'arrosage par suintement selon l'invention, présente une résistance à l'éclatement par pression du liquide d'arrosage jusqu'à 500 % supérieure à la résistance que présentent les réalisations connues de tuyaux d'arrosage par suintement. D'autre part, la résistance mécanique à l'éclatement par traction du tuyau d'arrosage par suintement suivant l'invention, est également supérieure, jusqu'à 240 %, à celle des réalisations connues.

En ce qui concerne le vieillissement du tuyau poreux d'arrosage par suintement qui fait l'objet de l'invention, le Tableau NO 2 ci-après donne le détail des résultats obtenus après avoir soumis ledit tuyau d'arrosage par suintement à un essai conformément aux dispositions de la norme ASTM-C53.

EP 0 462 038 B1

Tableau NO 2

| Essai | Tuyau d'arrosage par suintement neuf | Tuyau d'arrosage par suintement après 5 ans (1) |
|---|---|---|
| Pression d'éclatement | 1500 kPa | 1000 kPa |
| Résistance à la traction | 1950 N | 1250 N |
| Résistance à la déchirure | 160 N | 100 N |

(1) équivalent à un vieillissement de 1000 heures conformément à la norme ASTM-C53.

Les valeurs exposées dans le Tableau NO 2, qui comme celà a été précédemment indiqué, sont le résultat de l'application des essais réalisés suivant la norme ASTM-C53 au tuyau d'arrosage par suintement selon l'invention, sont concluantes en ce qui concerne la capacité de résistance au vieillissement du tuyau en question. En effet, les tuyaux d'arrosage par exsudation connus s'avèrent totalement inutilisables après 5 ans de vieillissement, toujours selon application de la norme ASTM-C53 susmentionnée.

Un autre avantage résultant de la structure et de la constitution du tuyau poreux d'arrosage par suintement qui fait l'objet de l'invention, réside dans sa flexibilité mécanique très élevée, qui lui permet de s'adapter parfaitement aux accidents du terrain et/ou aux nécessités que représente le tracé de la ligne d'arrosage dans chaque cas concret d'application.

Le tuyau poreux d'arrosage par suintement qui fait l'objet de l'invention, peut être indifféremment installé en surface ou enterré. Lorsque le tuyau poreux d'arrosage par suintement qui fait l'objet de l'invention, est installé en surface, sa flexibilité mécanique élevée, ainsi d'ailleurs que sa résistance mécanique très élevée à la traction et aux impacts mécaniques, permettent de le retirer et de le déplacer facilement vers d'autres zones de culture, ou de le retirer pour le ranger et le réutiliser ultérieurement.

En ce qui concerne la résistance du tuyau poreux d'arrosage par suintement selon l'invention, aux produits chimiques, les essais réalisés démontrent que ce tuyau résiste parfaitement à l'action de la totalité des produits chimiques qui sont habituellement utilisés, en concentrations normales, dans l'agriculture ; parmi de tels produits, il faut citer, entre autres, pour leur fréquence relativement élevée d'utilisation, les liquides fertilisants, les herbicides, les pesticides et l'acide nitrique.

De même, un autre avantage résultant de la structure et de la constitution du tuyau poreux d'arrosage par suintement qui fait l'objet de l'invention, consiste en sa très haute résistance à l'action des agents organiques tels que, entre autres, les bactéries, les algues, les racines, les insectes, etc.

Dans des conditions normales, les tuyaux d'arrosage par suintement sont entreposés enroulés sur eux-mêmes ou autour d'un tambour. A ce propos, les réalisations connues de tuyaux d'arrosage par suintement présentent comme principal inconvénient le fait d'occuper un volume élevé, ceci étant dû, essentiellement, à leur grosseur, à leur rigidité ou à leur manque de flexibilité mécanique qui entraînent de grands diamètres

5

d'enroulement.

Un autre avantage dû à la structure et à la constitution du tuyau poreux d'arrosage par suintement qui fait l'objet de l'invention, réside dans le fait qu'en raison de sa flexibilité mécanique élevée, il occupe un volume minimum, lorsqu'il est enroulé sur lui-même ou autour d'un tambour, étant donné que ledit tuyau d'arrosage par suintement requiert un diamètre d'enroulement très réduit.

La structure innovatrice du tuyau poreux qui fait l'objet de l'invention, permet de l'utiliser avec d'excellents résultats pour propager des fluides gazeux au sein de liquides, comme il convient, entre autres cas, dans les installations de cultures marines, où l'apport d'air dans l'eau de culture est nécessaire.

En ce qui concerne la capacité de propagation de gaz au sein de liquides, du tuyau poreux qui fait l'objet de l'invention, le Tableau NO 3 montre les résultats obtenus au cours des essais réalisés dans le but de déterminer le volume d'air propagé dans l'eau par ledit tuyau poreux.

### Tableau NO 3

| Pression de l'air (kPa) | Longueur du tuyau (centimètres) | Volume d'air propagé (litres/minutes) |
|---|---|---|
| 5 | 25 | 1000 |
| 5 | 50 | 1250 |
| 5 | 75 | 1500 |

Des résultats exposés dans le tableau NO 3, se dégage l'efficacité très élevée du tuyau poreux qui fait l'objet de l'invention, en ce qui concerne la propagation de gaz au sein des liquides, et en particulier la propagation d'air dans l'eau. En effet, la pression d'air de 5 kPa, à laquelle les essais cités ont été réalisés, est très inférieure à la pression de 1500 kPa qui, comme le montre le tableau NO 2, correspond à la pression d'éclatement du nouveau tuyau poreux selon l'invention, cette marge considérable de pressions rendant possible une régulation adéquate du débit d'air propagé en fonction des nécessités que présente chaque cas concret d'application.

Sur les feuilles de dessins annexées au présent exposé, on a reproduit le tuyau poreux d'arrosage par suintement qui fait l'objet de l'invention. Dans ces dessins :

La Figure 1 est une vue en perspective, avec coupe partielle, d'une portion de tuyau poreux selon l'invention.

La figure 2 est une vue schématique partielle d'une coupe transversale de ce tuyau.

La figure 3 est une vue de côté illustrant le fonctionnement du tuyau poreux d'arrosage par exsudation selon l'invention.

La figure 4 montre, en perspective et enroulé sur lui-même, le tuyau poreux d'arrosage par suintement qui fait l'objet de l'invention.

Les figures 5, 6 et 7 sont des graphiques correspondant aux performances techniques de l'objet de l'invention.

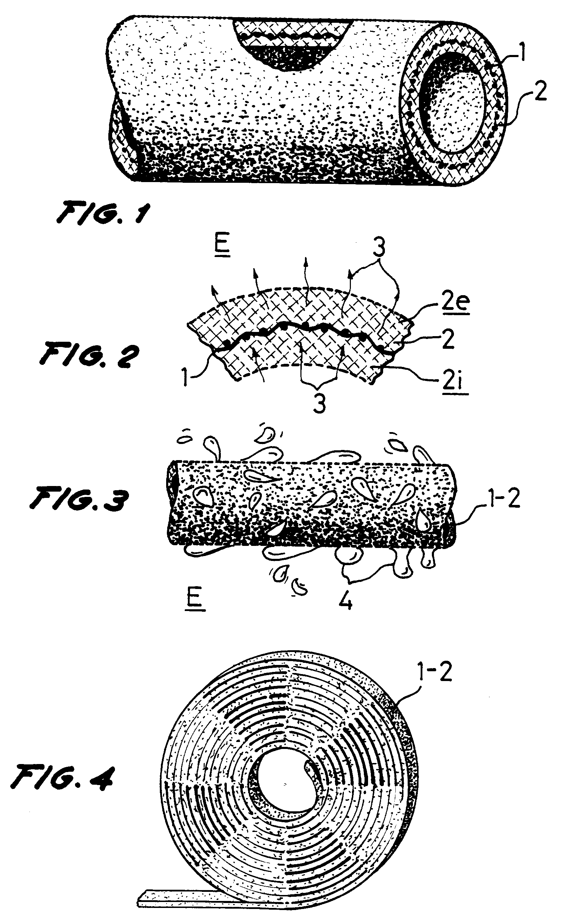

Le tuyau poreux ou microporeux qui fait l'objet de l'invention et dont on décrit ci-après un exemple de réalisation, avantageusement applicable, à l'arrosage par suintement ou exsudation, est constitué de la façon qui est illustrée sur la figure 1 des dessins, d'une âme intégrale et intégrante 1 et du revêtement 2 de matériau poreux dans lequel se trouve totalement noyée ladite âme intégrale 1.

Dans cet exemple de réalisation, l'âme intégrale 1 est composée de fils de polyester multifilaires qui forment précisément un tuyau en tissus obtenu à partir de fils de chaîne et de fils de trame selon n'importe quel procédé de tissage.

Le revêtement 2 de manière poreuse dans lequel, comme il a été expliqué ci-dessus, est totalement noyé le tuyau en tissus qui constitue l'âme intégrale 1, est composé d'un mélange fait de résine, de plastifiant, de pigment, tels que noir de fumée colloïdal, de bactéricides, de fongicides, d'algicides et d'épaississants.

Dans cet exemple de réalisation, la résine qui entre dans la composition du revêtement 2, consiste en un copolymère acrylique auto-réticulable à caractère anionique avec, de préférence, un contenu en solides représentant approximativement 45 % et avec une grandeur de particule comprise entre 0,1 et 0,3 micron, la résine susmentionnée présentant une résistance adéquate aux rayons ultra-violets.

Le plastifiant utilisé dans cet exemple de réalisation, est constitué dans sa majeure partie de chlore et de phosphore, dont la participation en poids est respectivement de 32,46 % et de 9,43 % ; il n'est pas corrosif et son point d'ébullition est élevé, de sorte qu'il ne présente pas de danger, étant donné que sa décomposition commence à une température supérieure à 220 degrés C, très supérieure aux températures habituelles de travail.

Le noir de fumée colloïdal utilisé comme pigment dans cet exemple de réalisation, présente une résistance élevée à l'action des rayons ultra-violets et à l'action des alcalis et des acides, sa concentration en solides étant approximativement de 50 %.

Le revêtement 2 de matière poreuse, qui est décrit dans cet exemple de réalisation, comprend également, pour la protection du tube d'arrosage par suintement qui fait l'objet de l'invention, contre l'action des agents organiques, un mélange fait de bactéricides, de fongicides et d'algicides, sans contenu de mercure ni d'aucun autre métal, de grande stabilité et d'un ample spectre d'action.

De cette façon, la structure et la composition précédemment décrites, du tuyau poreux d'arrosage par suintement qui fait l'objet de l'invention, permettent que la sortie du liquide d'arrosage 3 qui est représentée en détail sur les figures 2 et 3 des dessins, se réalise à travers des pores, dont la section de passage est fonction ou dépend de la pression de travail, ou de circulation, dudit liquide d'arrosage 3.

En effet, les figures 2 et 3 montrent en détail comment le liquide d'arrosage 3 traverse en premier lieu l'épaisseur interne 2i du revêtement de matière poreuse 2, pour ensuite traverser l'âme intégrale 1 du tuyau en tissu et enfin, après avoir traversé l'épaisseur externe 2e dudit revêtement 2, atteint la surface extérieure E du tuyau d'arrosage par suintement, où sous forme de gouttes 4, il imprègne le terrain environnant dans lequel il se diffuse.

La figure 4 montre la flexibilité mécanique élevée obtenue grâce à la structure et à la composition décrites antérieurement, du tuyau poreux d'arrosage par suintement objet de l'invention, flexibilité qui permet que, le tuyau étant enroulé sur lui-même, le volume de rangement occupé soit le plus réduit possible.

En effet, la figure 1 montre la forme cylindrique qu'adopte le tuyau poreux d'arrosage par suintement qui fait l'objet de l'invention, lorsque le liquide d'arrosage 3 circule à travers ledit tuyau à une pression de travail déterminée, pression qui est comprise entre 30 kPa et 80 kPa. D'autre part, la figure 4 montre comment ledit tuyau poreux, n'étant pas soumis à la pression du liquide d'arrosage 3, prend une forme oblongue aplatie permettant son enroulement sur lui-même ou sur un tambour, avec un encombrement réduit.

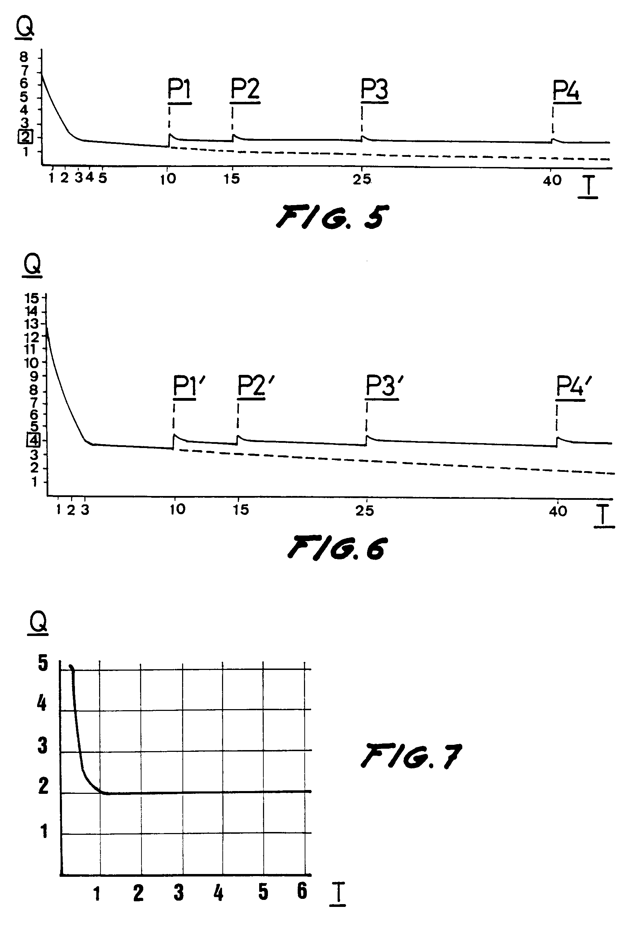

Les figures 5, 6 et 7 montrent, par des représentations graphiques correspondantes, le débit du liquide d'arrosage exsudé à travers le tuyau poreux qui fait l'objet de l'invention, en fonction du temps et pour des pressions de travail déterminées.

Sur les figures 5, 6 et 7, l'axe des ordonnées montre le débit du liquide d'arrosage Q exsudé à travers le tuyau, exprimé en litres/heure, tandis que l'axe des abscisses représente le temps T exprimé en jours.

La figure 5 montre comment, pour une pression initiale donnée, le débit Q du liquide d'arrosage exsudé à travers le tuyau poreux qui fait l'objet de l'invention, décroît rapidement et progressivement d'une valeur initiale de 7 litres/heure à une valeur de 2 litres/heure au cours des trois premiers jours de travail. Sur cette figure, la ligne en pointillés montre la lente évolution décroissante du débit Q du liquide d'arrosage exsudé, en maintenant constante la pression initiale de travail ou de circulation du liquide d'arrosage. Afin de maintenir de façon pratiquement constante le débit Q du liquide d'arrosage exsudé à une valeur de 2 litres/heure, comme le montre le graphique de la figure 5, le liquide d'arrosage est injecté à des pressions croissantes distinctes P1, P2, P3 et P4 dans les temps T indiqués sur cette figure. Comme le montre la figure 5, de façon pertinente, l'intervalle de temps compris entre l'application des pressions consécutives croissantes est chaque fois plus grand en fonction précisément du temps écoulé, cela étant dû à l'hystérèse que présente le tuyau poreux d'arrosage par suintement objet de l'invention.

De même, la figure 6 montre comment, pour une pression initiale donné, le débit Q du liquide d'arrosage exsudé décroît rapidement et progressivement d'une valeur initiale de 13 litres/heure à une valeur de 4 litres/heure, et l'application des pressions croissantes de transvasement du liquide d'arrosage P1′, P2′, P3′ et P4′, destinées à maintenir constant le débit Q du liquide d'arrosage, dans les temps T correspondant aux temps indiqués sur la figure 5. Ces augmentations de pression permettent, en outre, de débarrasser les pores des impuretés éventuellement accumulées au cours du processus de suintement.

En résumé, et de façon théorique, le comportement du tuyau poreux d'arrosage par suintement qui fait l'objet de l'invention, est schématisé sur le graphique de la figure 7 qui représente la chute rapide du débit du liquide d'arrosage exsudé Q que celui-ci subit au cours des premières heures de fonctionnement, pour, par la suite, se maintenant à un niveau pratiquement constant.

**Revendications**

1. Tuyau poreux pour le transport et la distribution de fluides, notamment pour l'arrosage par suintement, caractérisé en ce qu'il est constitué d'une âme intégrale (1) de tuyau en tissu très résistant à l'action des agents organiques et inorganiques, à l'humidité et aux variations de température ; cette âme (1) étant recouverte d'une matière poreuse (2) composée d'un mélange comprenant au moins :
   - une résine ,
   - un plastifiant ,
   - un pigment ,
   - un bactéricide,
   - un fongicide,
   - un algicide,
   - un épaississant.

2. Tuyau poreux selon la revendication 1, caractérisé en ce qu'il a une capacité d'absorption d'eau comprise entre 0,5 % et 50 % du poids du mélange, la proportion occupée par le tuyau en tissu (1) et le revêtement de matière poreuse (2) dans lequel est noyé ledit tuyau en tissu (1), étant comprise entre 5/1 et 1/5 en poids.

3. Tuyau poreux suivant l'une des revendications 1 ou 2, caractérisé en ce que l'âme intégrale (1) du tuyau en tissu, est tissée selon un quelconque procédé de tissage.

4. Tuyau poreux suivant l'une quelconque des revendications 1 à 3, caractérisé en ce que l'âme intégrale (1) du tuyau en tissu est faite de fibres synthétiques telles que fibres polyesters, fibres polyamides, fibres polyoléfines, ou fibres acryliques.

5. Tuyau poreux, suivant l'une quelconque des revendications 1 à 4, caractérisé en ce que la résine entrant dans la composition de la matière poreuse (2) dans laquelle est noyée l'âme en tissu (1), est hautement résistante au vieillissement dû aux effets de l'eau, de l'air, du soleil, des terrains et des produits chimiques et/ou naturels d'engrais ou de traitement des terres.

6. Tuyau poreux suivant l'une quelconque des revendications 1 à 5, caractérisé en ce que la résine entrant dans la composition de la matière poreuse (2) dans laquelle est noyée l'âme en tissu (1), est un copolymère acrylique auto-réticulable à caractère anionique.

7. Tuyau poreux selon la revendication 6, caractérisé en ce que ledit copolymère acrylique auto-réticulable à caractère anionique, a un contenu en solides représentant approximativement 45 %, avec une grandeur de particule comprise entre 0,1 et 0,3 micron.

8. Tuyau poreux suivant l'une quelconque des revendications 1 à 7, caractérisé en ce que le pigment entrant dans la composition de la matière poreuse (2) dans laquelle est noyée l'âme en tissu (1), est un noir de fumée colloïdal ayant, de préférence, une concentration en solides de 50 % environ.

9. Tuyau poreux selon l'une quelconque des revendications 1 à 8, caractérisé en ce que le plastifiant entrant dans la composition de la matière poreuse (2) dans laquelle est noyée l'âme (1) en tissu, consiste en un mélange de chlore et de phosphore, de faible solubilité dans l'eau, non corrosif, et ayant un point d'ébullition élevé.

10. Tuyau poreux suivant l'une quelconque des revendications 1 à 9, caractérisé par le fait que la section de passage de ses pores, est fonction de la pression de travail, ou de circulation, du liquide d'arrosage.

**Claims**

1. Porous hose for conveying and distributing fluids, in particular for irrigation by seeping, characterised in that it consists of an integral hose core (1) which is made of fabric which is highly resistant to the action of organic and inorganic agents, to moisture and to variations in temperature; this core (1) being covered with a porous material (2) composed of a mixture comprising at least:
   - a resin;
   - a plasticiser;
   - a pigment;
   - a bactericide;
   - a fungicide;
   - an algicide;
   - a thickening agent.

2. Porous hose according to Claim 1, characterised in that it has a water absorption capacity of between 0.5 and 50 weight % of the mixture, the proportion occupied by the fabric hose (1) and the covering of porous material (2) in which said fabric hose (1) is embedded being between 5/1 and 1/5 by weight.

3. Porous hose according to either of Claims 1 and 2, characterised in that the integral fabric hose core (1) is woven according to any weaving process.

4. Porous hose according to any one of Claims 1 to 3, characterised in that the integral fabric hose core (1) is made of synthetic fibres such as polyester fibres, polyamide fibres, polyolefin fibres or acrylic fibres.

5. Porous hose according to any one of Claims 1 to 4, characterised in that the resin in the composition of the porous material (2) in which the fabric core (1) is embedded is highly resistant to aging which is due to the effects of water, air, the sun, soils, and chemical and/or natural fertilizer or earth treatment products.

6. Porous hose according to any one of Claims 1 to 5, characterised in that the resin in the composition of the porous material (2) in which the fabric core (1) is embedded is an anionic-type, self-crosslinking acrylic copolymer.

7. Porous hose according to Claim 6, characterised in that the anionic type self-crosslinking acrylic copolymer contains approximately 45 % solids with a particle size of between 0.1 and 0.3 microns.

8. Porous hose according to any one of Claims 1 to 7, characterised in that the pigment in the composition of the porous material (2) in which the fabric core (1) is embedded is a colloidal carbon black preferably having a concentration of solids of approximately 50 %.

9. Porous hose according to any one of Claims 1 to 8, characterised in that the plasticiser in the composition of the porous material (2) in which the fabric core (1) is embedded consists of a mixture of chlorine and phosphorus, having low solubility in water, being non-corrosive and having a high boiling point.

10. Porous hose according to any one of Claims 1 to 9, characterised in that the passage cross-section of its pores is a function of the operating or circulating pressure of the irrigation liquid.

**Patentansprüche**

1. Poröser Schlauch zum Transport und zur Verteilung von Flüssigkeiten, insbesondere zur Sickerbewässerung, dadurch gekennzeichnet, daß er aus einer integrierten Textilschlauchseele (1) gebildet wird, welche gegenüber der Einwirkung von organischen und anorganischen Stoffen, Feuchtigkeit und Temperaturschwankungen sehr widerstandsfähig ist, wobei die Seele (1) mit einem porösen Material überzogen ist, welches aus mindestens
   - einem Harz
   - einem Weichmacher

9

- einem Pigment
- einem Bakterizid
- einem Fungizid
- einem Algizid sowie
- einem Verdickungsmittel

zusammengesetzt ist.

2. Poröser Schlauch gemäß Anspruch 1, dadurch gekennzeichnet, daß er eine Wasserspeicherkapazität von 0,5 - 50 Gew.% der Mischung aufweist, wobei das von dem Textilschlauch (1) und der den Textilschlauch durchtränkenden Umhüllung aus porösem Material (2) gebildete Verhältnis zwischen 5 : 1 und 1 : 5 Gewichtsanteile beträgt.

3. Poröser Schlauch nach Anspruch 1 oder 2, dadurch gekennzeichnet, daß die integrierte Textilschlauchseele durch ein Webverfahren hergestellt ist.

4. Poröser Schlauch nach einem der Ansprüche 1 bis 3, dadurch gekennzeichnet, daß die integrierte Textilschlauchseele (1) aus Synthesefasern wie zum Beispiel Polyester-, Polyamid-, Polyolefin- oder Acrylfasern hergestellt ist.

5. Poröser Schlauch nach einem der Ansprüche 1 bis 4, dadurch gekennzeichnet, daß das Harz in der Zusammensetzung des porösen Materials (2), mit welchem die integrierte Textilschlauchseele (1) durchtränkt ist, gegenüber der Einwirkung von Wasser, Luft, Sonne, Böden und Chemikalien und/oder Naturdünger und Bodenbehandlung höchst alterungsbeständig ist.

6. Poröser Schlauch nach einem der Ansprüche 1 bis 5, dadurch gekennzeichnet, daß das Harz in der Zusammensetzung des porösen Materials (2), mit welchem die integrierte Textilschlauchseele (1) durchtränkt ist, ein selbstvernetzendes Acrylcopolymer vom anionischen Typ ist.

7. Poröser Schlauch gemäß Anspruch 6, dadurch gekennzeichnet, daß das selbstvernetzende Acrylcopolymer vom anionischen Typ einen Feststoffgehalt von annäherungsweise 45 % und eine Partikelgröße zwischen 0,1 und 0,3 $\mu$m aufweist.

8. Poröser Schlauch nach einem der Ansprüche 1 bis 7, dadurch gekennzeichnet, daß das Pigment in der Zusammensetzung des porösen Materials (2), mit welchem die integrierte Textilschlauchseele (1) durchtränkt ist, aus kolloidalem Ruß gebildet wird und vorzugsweise eine Feststoffkonzentration von etwa 50 % aufweist.

9. Poröser Schlauch nach einem der Ansprüche 1 bis 8, dadurch gekennzeichnet, daß der Weichmacher in der Zusammensetzung des porösen Materials (2), mit welchem die integrierte Textilschlauchseele (1) durchtränkt ist, aus einem nichtkorrodierendem Chor- und Phosphorgemisch von schlechter Wasserlöslichkeit und erhöhtem Siedepunkt besteht.

10. Poröser Schlauch nach einem der Ansprüche 1 bis 9, dadurch gekennzeichnet, daß der Querschnitt des Durchtritts durch die Poren eine Funktion des Arbeitsdruckes oder der Zirkulation der Bewässerungsflüssigkeit darstellt.

FIG. 1

FIG. 2

FIG. 3

FIG. 4

FIG. 5

FIG. 6

FIG. 7